# EUROPEAN PATENT APPLICATION

(11) **EP 4 494 867 A1**
(43) Date of publication of application: **22.01.2025**
(21) Application number: 23770772.4
(22) Date of filing: 14.03.2023
(51) Int. Cl.: B32B 27/28, B32B 27/32, B65D 65/40

(54) **LAMINATED FILM AND PACKAGE**

(30) Priority: 17.03.2022 JP 2022042467
(71) Applicant: Fujimori Kogyo Co., Ltd., Tokyo 112-0002 (JP)
(72) Inventor: KUWABARA Hiroshi, Tokyo 112-0002 (JP); FUJIKAWA Naoto, Tokyo 112-0002 (JP)
(74) Representative: Lavoix
(86) International application number: PCT/JP2023/009812
(87) International publication number: WO 2023/176817

(57) **Abstract**

In this laminated film (10), a sealant layer (11) and a coextruded film (12) in which polyethylene resin layers (14) are adjacently laminated through coextrusion on at least a single surface of a barrier resin layer (15) formed from an ethylene-vinyl alcohol copolymer (EVOH) are laminated.

## Description

### TECHNICAL FIELD

The present invention relates to a laminated film and a package.

Priority is claimed on Japanese Patent Application No. 2022-042467, filed March 17, 2022, the content of which is incorporated herein by reference.

### BACKGROUND ART

Paragraph 0010 of Patent Document 1 discloses, as a film used for a packaging bag in the related art, a laminated film in which a polyolefin resin such as low-density polyethylene, linear low-density polyethylene, an ethylene-vinyl acetate copolymer, or polypropylene is laminated as a sealant layer on a base material such as biaxially stretched polypropylene, biaxially stretched polyamide, or biaxially stretched polyester. In addition, it is suggested that a metal layer, a ceramic layer, an ethylene-vinyl alcohol copolymer (EVOH), and the like may be laminated to enhance barrier properties of the laminated film.

Patent Document 2 discloses a coextruded multilayer barrier sealant film in which first (surface) and fifth (rear surface) layers consisting of an olefinic resin layer, a third layer containing EVOH, and second and fourth layers consisting of an adhesive resin layer are coextruded in order of "first layer/second layer/third layer/fourth layer/fifth layer."

### CITATION LIST

### PATENT DOCUMENTS

[Patent Document 1]
   Japanese Unexamined Patent Application, First Publication No. 2013-39932
[Patent Document 2]
   Japanese Unexamined Patent Application, First Publication No. 2008-81525

### SUMMARY OF INVENTION

### TECHNICAL PROBLEM

In the laminated film used for a packaging bag in the related art, a thermally adhesive resin (sealant) layer such as polyethylene (PE) is laminated on the inner surface, and a base material, such as polyethylene terephthalate (PET), having higher heat resistance than the sealant is laminated on the outer surface. During the thermal adhesion of the laminated film, the sealant is melted to join the inner surface of the laminated film. However, there is a problem that packaging bags containing different types of resins may be difficult to recycle as plastic containers and packaging.

In recent years, mono-material containers and packaging using a single resin have been advocated to facilitate recycling. However, when packaging bags are formed from films made solely of polyethylene, application is highly restricted due to poor barrier properties. When a coextruded sealant containing an EVOH layer is used as a barrier film, the EVOH layer is about 6 µm thick at thinnest, which reduces recyclability.

The present invention has been made from the viewpoint of the above-described circumstances, and an object of the present invention is to provide a laminated film and package that can achieve both recyclability and barrier properties.

### SOLUTION TO PROBLEM

To solve the problem, a laminated film according to aspect 1 of the present invention comprises a coextruded film in which polyethylene resin layers are adjacently laminated through coextrusion on at least a single surface of a barrier resin layer formed from an ethylene-vinyl alcohol copolymer (EVOH), and a sealant layer that are laminated on the coextruded film.

In aspect 2, the polyethylene resin layers may be provided adjacent to both surfaces of the barrier resin layer in the coextruded film of aspect 1 by coextrusion.

In aspect 3, the barrier resin layer of aspect 1 or 2 may have a thickness of 1 to 5 µm.

In aspect 4, the coextruded film according to any one of aspects 1 to 3 may be used as a base material (layer).

In aspect 5, the coextruded film in any one of aspects 1 to 4 may be laminated between the sealant layer and a base material (layer) made of a polyethylene resin.

In aspect 6, a layer made of a polyethylene resin may be laminated between the sealant layer and the base material consisting of the coextruded film in any one of aspects 1 to 5.

In aspect 7, the coextruded film in any one of aspects 1 to 6 may be non-stretched.

In addition, aspect 8 of the present invention is a package formed from the laminated film according to any one of aspects 1 to 7.

In addition, aspect 9 of the present invention is a standing pouch formed from the laminated film according to any one of aspects 1 to 7. The standing pouch may have a hollow container main body, which may be formed from two body films as body materials and a bottom film as a bottom material. Both the body films and the bottom film may be formed from the laminated film according to any one of aspects 1 to 7.

In addition, aspect 10 of the present invention is a standing pouch in which only a bottom material is formed from the laminated film according to any one of aspects 1 to 7.

### ADVANTAGEOUS EFFECTS OF INVENTION

According to each of the aspects of the present invention, the coextruded film does not need to be as thick as a multilayer sealant film, and therefore, the thickness of the barrier resin layer formed from EVOH can be reduced, thereby achieving both recyclability and barrier properties. Costs can be reduced because the amount of relatively expensive EVOH used can be reduced. Since the sealant layer can be composed without EVOH, there is more degree of freedom in the design of the sealant layer.

### BRIEF DESCRIPTION OF DRAWINGS

FIG. 1 is a cross-sectional view illustrating a laminated film of a first embodiment.
FIG. 2 is a cross-sectional view illustrating a laminated film of a second embodiment.
FIG. 3 is a front view showing a standing pouch as one embodiment of a packaging bag of the present invention.

### DESCRIPTION OF EMBODIMENTS

Hereinafter, the present invention will be described based on suitable embodiments.

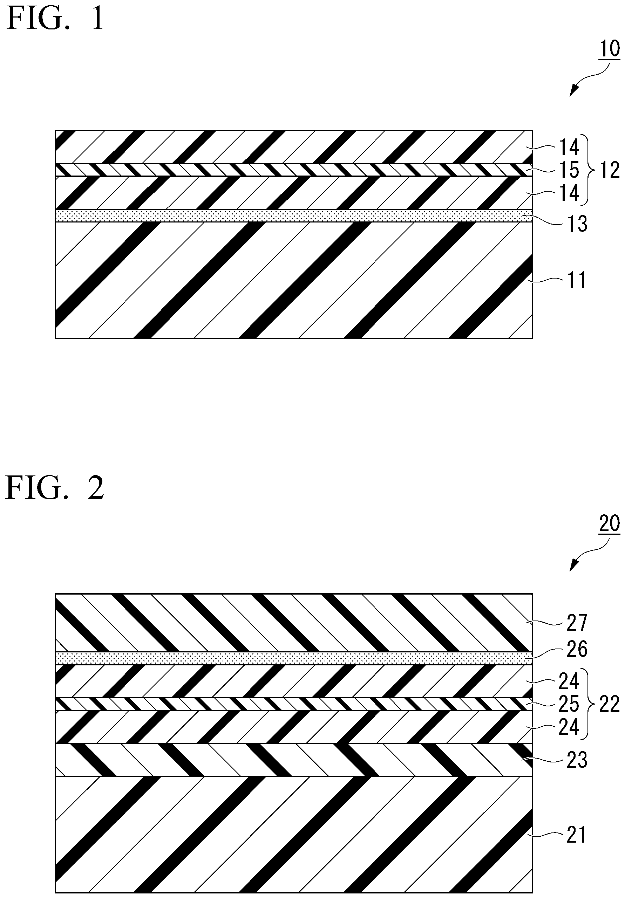

As shown in FIG. 1, a laminated film 10 of a first embodiment is a multilayer laminated film 10 in which a sealant layer 11 and a coextruded film 12 in which polyethylene resin layers 14 are adjacently laminated through coextrusion on both surfaces of a barrier resin layer 15 formed from EVOH are laminated. In this case, the coextruded film 12 may be a base material (layer) of the laminated film 10.

Although not specifically shown in the drawing, in the laminated film 10 of the first embodiment, the coextruded film 12 in which the polyethylene resin layers 14 are adjacently laminated through coextrusion on at least a single surface of the barrier resin layer 15 formed from EVOH may be used. A polyethylene resin layer 14 may be laminated on a single surface of the barrier resin layer 15, may be laminated on a surface closer to the sealant layer 11, or may be laminated on a surface farther from the sealant layer 11.

As shown in FIG. 2, a laminated film 20 of a second embodiment is a multilayer laminated film 20 in which a base material film 27, a sealant layer 21, and a coextruded film 22 in which polyethylene resin layers 24 are adjacently laminated through coextrusion on both surfaces of a barrier resin layer 25 formed from EVOH are laminated. In this case, the base material film 27 is a base material (layer) of the laminated film 20. The base material film 27 is preferably made of a polyethylene resin.

Although not specifically shown in the drawing, in the laminated film 20 of the second embodiment, the coextruded film 22 in which the polyethylene resin layers 24 are adjacently laminated through coextrusion on at least a single surface of the barrier resin layer 25 formed from EVOH may be used. A polyethylene resin layer 24 may be laminated on a single surface of the barrier resin layer 25, may be laminated on a surface closer to the sealant layer 21, or may be laminated on a surface farther from the sealant layer 21.

The polyethylene resin used in the sealant layers 11 and 21, the polyethylene resin layers 14 and 24, the base material film 27, and the like may be a homopolymer of ethylene or a copolymer mainly composed of ethylene. Examples of monomers (comonomers) other than ethylene include one type or two or more types of α-olefins such as 1-butene, 1-hexene, and 1-octene, cyclic olefins such as norbomene, vinyl monomers such as vinyl acetate, vinyl chloride, and acrylic acid. When comonomers are used in polyethylene resins, one type or two or more types of comonomers may be used.

The proportion of ethylene in constituent monomers of a polyethylene resin is preferably 50 wt% or more, for example, may be 80 wt% to 100 wt%. Ethylene or comonomers used in polyethylene resins may be compounds derived from fossil resources such as petroleum, or may be compounds derived from biomass such as plants. The resin contained in the polyethylene resin layers may be only a polyethylene resin. Recycled polyethylene may be used in a polyethylene resin.

The polyethylene resin layers 14 and 24 of the coextruded films 12 and 22 may contain a polyethylene resin at a proportion of 50 wt% or more and 80 wt% to 100 wt%. The resin contained in the polyethylene resin layers 14 and 24 may be only a polyethylene resin. The material for forming the polyethylene resin layers 14 and 24 may be one type of polyethylene resin or may be a blend of two or more types of polyethylene resins. Low-density polyethylene (LDPE), linear low-density polyethylene (LLDPE), medium-density polyethylene (MDPE), and high-density polyethylene (HDPE) can all be used as polyethylene resins.

EVOH that forms the barrier resin layers 15 and 25 is obtained through, for example, copolymerizing ethylene with a vinyl ester monomer, saponifying the resulting copolymer, and converting the vinyl ester unit to a vinyl alcohol unit. Examples of vinyl ester monomers include carboxylic acid vinyl esters such as vinyl formate, vinyl acetate, vinyl butyrate, and vinyl benzoate. EVOH preferably has an appropriate ethylene content because a larger proportion of vinyl alcohol units improves barrier properties, but decreases moisture resistance. Examples of ethylene contents of EVOH include 20 mol% to 60 mol%. The saponification degree of EVOH is not limited to 100 mol%, but for example, 80 mol% or higher is preferable.

The barrier resin layers 15 and 25 may contain EVOH at a proportion of 50 wt% or more and 80 wt% to 100 wt%. The resin contained in the barrier resin layers 15 and 25 may be EVOH only. The material for forming the barrier resin layers 15 and 25 may be one type of EVOH or may be a blend of two or more types of EVOH.

The total thickness of each of the coextruded films 12 and 22 is not particularly limited, but examples thereof include about 10 µm to 50 µm. Of these, the thickness of each of the barrier resin layers 15 and 25 is preferably 1 µm to 5 µm and more preferably 2 µm to 3 µm. Examples of the thickness of each of the polyethylene resin layers 14 and 24 include about 4 µm to 24 µm.

When the coextruded film 22 is laminated between the sealant layer 21 and the base material film 27 as shown in FIG. 2, the total thickness of the coextruded film 22 can be reduced compared to when the coextruded film 12 is used as a base material as shown in FIG. 1.

The coextruded films 12 and 22 can reduce the thickness of the barrier resin layer 15 and 25 formed from EVOH, reducing the amount of relatively expensive EVOH used. This can reduce costs of the material of the laminated films 10 and 20.

Compared to the case where a coextruded sealant containing an EVOH layer is used as a barrier film, the laminated films 10 and 20 of the embodiments can be configured not to contain EVOH in the sealant layers 11 and 21. For this reason, it is possible to improve the degree of freedom in the design of the sealant layers 11 and 21.

The sealant layers 11 and 21 are formed from a sealant resin. As sealant resins, polyethylene resins with relatively low density, such as linear low-density polyethylene (LLDPE) and low-density polyethylene (LDPE), or non-stretched polyethylene resins are preferable.

The sealant layers 11 and 21 may be formed from one type of polyethylene resin or may contain two or more types of polyethylene resins. Examples of two or more types of polyethylene resins include a blend of linear low-density polyethylene (LLDPE), low-density polyethylene (LDPE), or the like with high-density polyethylene (HDPE), medium-density polyethylene (MDPE), or the like.

The thickness of the sealant layers 11 and 21 is not particularly limited, but examples thereof include about 50 µm to 180 µm. The sealant layers 11 and 21 may be single-layer sealant films or multi-layer sealant films. Since the sealant layers 11 and 21 do not contain EVOH, the increase in costs can be avoided even if the sealant layers 11 and 21 have sufficient thickness.

Multi-layer sealant films can be formed by laminating two or more film-shaped sealant resin layers through a coextrusion method, an extrusion lamination method, a sandwich lamination method, a thermal lamination method, or the like. In the case of multi-layer sealant films, a polyethylene resin can be employed for each layer. Specific examples thereof include a three-layer structure formed by sandwiching high-density polyethylene (HDPE), medium-density polyethylene (MDPE), or the like between linear low-density polyethylene (LLDPE), low-density polyethylene (LDPE), and the like.

The base material film 27 may be a stretched or non-stretched polyethylene resin film. Examples of the base material film 27 include a polyethylene resin with relatively high density, such as medium-density polyethylene (MDPE) and high-density polyethylene (HDPE). The base material film 27 may be formed from one type of polyethylene resin or may contain two or more types of polyethylene resins. The thickness of the base material film 27 is not particularly limited, but examples thereof include about 10 µm to 50 µm.

In each layer such as the sealant layers 11 and 21, the coextruded films 12 and 22, and the base material film 27, the resin layer may contain additives other than a resin. Additives are not particularly limited, but examples thereof include antioxidants, lubricants, anti-blocking agents, flame retardants, ultraviolet absorbers, light stabilizers, antistatic agents, colorants, and cross-linking agents. The additives may be components that are compatible with a resin or components that are incompatible with a resin.

As shown in FIG. 1, the sealant layer 11 and the coextruded film 12 may be joined together via an adhesive layer 13 through dry lamination or the like. As shown in FIG. 2, when the base material film 27 is laminated on the outside of the coextruded film 22, the coextruded film 22 and the base material film 27 may be joined together via an adhesive layer 26 through dry lamination or the like. At least one of the films may be subjected to surface treatment such as ozone treatment, plasma treatment, corona treatment, discharge treatment, or flame treatment.

The adhesive layers 13 and 26 may be formed from adhesives or anchor coat agents. The material for forming the adhesive layers 13 and 26 is not limited, but examples thereof include urethane compounds, epoxy compounds, isocyanate compounds, polyethylene imine, and organic titanium compounds such as titanium alkoxide. Examples of the thickness of the adhesive layers 13 and 26 include about 0.1µm to 10 µm, about 1 µm to 6 µm, or about 3 µm to 4 µm.

As shown in FIG. 2, the sealant layer 21 and the coextruded film 22 may be joined together via an extruded resin layer 23 through extrusion lamination or the like. The extruded resin layer 23 may be formed from a polyethylene resin. The extruded resin layer 23 may be extruded downward using, for example, a molding machine such as a T-die. A roll member for guiding a film to be adhered may be placed below the molding machine. A cooling roll, a heating roll, or the like may be used as a roll member to adjust the temperature of a film. A nip roll or the like may be used to press a film toward the extruded resin layer 23.

FIG. 1 is an example of the laminated film 10 using the coextruded film 12 as a base material, in which the sealant layer 11 and the coextruded film 12 are joined together via the adhesive layer 13. Although not specifically shown in the drawing, in the laminated film 20 using the base material film 27 as a base material as shown in FIG. 2, the sealant layer 21 and the coextruded film 22 may be joined together via the adhesive layer 13.

FIG. 2 is an example of the laminated film 20 using the base material film 27 as a base material, in which the sealant layer 21 and the coextruded film 22 are joined together via the extruded resin layer 23. Although not specifically shown in the drawing, in the laminated film 10 using the coextruded film 12 as a base material as shown in FIG. 1, the sealant layer 11 and the coextruded film 12 may be joined together via the extruded resin layer 23. In this case, the adhesive layer 26 and the base material film 27 may be omitted from the laminated film 20 shown in FIG. 2.

Although not specifically shown in the drawing, a printed layer, an applied layer, a coated layer, or the like may be formed on at least one surface of the coextruded films 12 and 22, the base material film 27, or other resin films.

The laminated films 10 and 20 are not limited to the lamination of the sealant layers 11 and 21 or the base material film 27, but one or more layers of desired polyethylene resin films may be laminated. For example, a layer made of a polyethylene resin may be laminated between the sealant layers 11 and 21 and the coextruded films 12 and 22. Here, the layer made of a polyethylene resin may be the above-described extruded resin layer 23 or may be a resin film laminated through dry lamination or the like.

Two or more layers of the coextruded films 12 and 22 may be laminated. The coextruded films 12 and 22 may be non-stretched. When two or more coextruded films 12 and 22 are laminated to the same laminated films 10 and 20, non-stretched coextruded films 12 and 22 and stretched coextruded films 12 and 22 may be used together. Lamination of the non-stretched films can improve tear strength.

Regarding the total weight of each of the laminated films 10 and 20 of the embodiments, the total weight of the polyethylene resin is preferably 95 wt% or more and the total weight of materials other than the polyethylene resin is preferably 5 wt% or less. Accordingly, in the laminated films 10 and 20, it is possible to realize mono-materialization with a polyethylene resin. Examples of materials other than the polyethylene resin include EVOH, adhesive layers, printed layers, applied layers of varnish or the like, and coated layers.

The laminated films 10 and 20 of the embodiments can be used for producing a package. It is sufficient as long as at least one member of a package is formed from the laminated films 10 and 20 of the embodiments. Examples of packages include packaging bags such as pouches and bags, tubes, containers, sleeve packaging, strip packaging, and lid materials. Specific examples of packaging bags include three-side seal bags, four-side seal bags, pillow bags, gusset bags, and standing pouches.

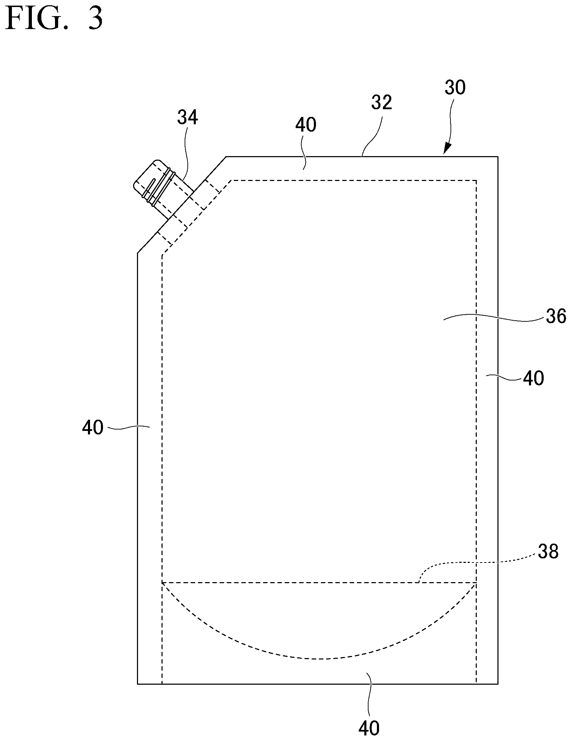

FIG. 3 is a front view showing a standing pouch 30 as an example of a packaging bag using the laminated films 10 and/or 20, and this standing pouch 30 includes a hollow container main body 32 and a spout member 34 attached to one end of the container main body 32. The container main body 32 is formed, for example, from two body films 36 (body material) which are rectangular in shape with the same planar shape as each other, and a bottom film 38 (bottom material). The body films 36 and the bottom film 38 are formed of the laminated film 10 or 20, and outer edge portions of the sealant layers 11 or 21 are heat-welded to each other to form a heat-sealed portion 40. Accordingly, the container main body 32 has a bag shape as a whole, and when it is not filled with contents, it collapses into a planar shape. Both the body films 36 and the bottom film 38 may be formed of the laminated film 10, both the body films 36 and the bottom film 38 may be formed of the laminated film 20, the body films 36 may be formed of the laminated film 10 and the bottom film 38 may be formed of the laminated film 20, or the body films 36 may be formed of the laminated film 20 and the bottom film 38 may be formed of the laminated film 10. In addition, the present invention is not limited to the standing pouch and can be applied to various packaging bags.

When the laminated films 10 and 20 are flexible laminated films, soft packaging packages can be formed. Since these are easy to refill and dispose of, they are suitable for use in refill packages such as refill pouches. A package may have two or more types of members, such as body and bottom materials of a standing pouch.

As a standing pouch, one may be formed from a pair of body materials and a bottom material folded into two by a fold line, as illustrated in FIG. 3. Each sheet of the body materials is placed in front of and behind the body portion. The planar shape of the front and rear body materials may be identical. The bottom material is folded so that the outer surfaces face each other by the fold line. Above the fold line, body seal portions are formed on the left and right sides, and the inner surfaces of the front and rear body materials are joined together.

The bottom material of the standing pouch is sandwiched between the front and rear body materials with the fold line facing up. Below the fold line, a bottom seal portion is formed where the inner surface of the bottom material is joined to the inner surfaces of the body materials. The bottom seal portion joins the region partitioned by the fold line of the bottom material to the body materials on the same side in the front-rear direction. Standing pouches can be made freestanding by spreading the bottom material against the fold line.

In a standing pouch having body materials and a bottom material, either the body materials or the bottom material may be formed from the laminated film 10 or 20, or the laminated film 10 or 20 may be used in both the body materials and the bottom material. It is preferable to use the laminated film 10 or 20 in the bottom material having a fold line. In the lower portion of the standing pouch, the bottom material, folded into two by the fold line, is joined between a pair of body materials, and therefore, it is preferable to use the laminated film 10 or 20 in the bottom material to provide sufficient strength against, for example, dropping of the packaging bag or bending of the bottom material.

Only the bottom material of the standing pouch may be formed from the laminated film 10 or 20 having a barrier resin layer formed from EVOH. The body materials in this case may be formed from a laminated film having no EVOH layer.

The laminated film having no EVOH layer may be laminated with the sealant layer 11, with the polyethylene resin layer 14 serving as a base material in the laminated film 10 of the first embodiment. In addition, the coextruded film 22 in the laminated film 20 of the second embodiment may be omitted. The sealant layers 11 and 21 and the polyethylene resin layer 14 or the base material film 27 may be joined together by the adhesive layer 13 or by the extruded resin layer 23. The base material film 27 of the laminated film having no EVOH layer preferably consists of a polyethylene resin.

The polyethylene resin used for the laminated film having no EVOH layer is not particularly limited, but can be designed by selecting from the same options as the polyethylene resin used for the sealant layers 11 and 21, polyethylene resin layers 14 and 24, the base material film 27, and the like described above.

A package may have a filling port, a spout, and the like. For example, the space between front and rear body members is opened at the top of the package and can be used for filling or pouring out contents. After filling contents, the body members may be joined together to seal the package.

The spout may be formed into a shape that protrudes thinly at the top or corner of the package. The spout of a standing pouch or the like may be film-molded or may be of a spout type. When the spout is installed diagonally at the corner, a biaxially stretched film is advantageous in terms of drop strength and the like.

To facilitate opening of the package, easy-opening means such as notches and half-cut grooves may be formed around the opening portion. The easy-opening means of a standing pouch is preferably formed at a film-molded spout.

Dimensions of a package are not particularly limited, but for example, for refill container applications, the height in the vertical direction is about 100 mm to 500 mm, the width in the horizontal direction is about 70 mm to 300 mm, and the filling amount is about 100 cm³ to 5,000 cm³. Examples of contents include fluids such as liquids, powders, and grains. The types of contents are not particularly limited, but examples thereof include detergents, drugs, cosmetics, pharmaceuticals, beverages, seasonings, ink, paints, and fuels.

A package may be formed solely from the laminated films 10 and 20 of the embodiments, or may be combined with accessory members such as a label, a tag, a straw, and an outer box. From the viewpoint of recycling, it is preferable that the accessory members can be separated from the package.

Although the present invention has been described above based on suitable embodiments, the present invention is not limited to the embodiments described above, and various modifications can be made within the scope not departing from the gist of the present invention. Examples of modifications include additions, substitutions, omissions, and other changes of constituent elements.

The laminated films of the embodiments are mainly composed of a polyethylene resin and have a sealant, and therefore, these can be used for various applications, not limited to packaging such as packages and packaging films.

### EXAMPLES

Hereinafter, the present invention will be described in more detail using examples but is not limited to these examples.

### (Laminated film of Example 1)

A coextruded film of an embodiment was used as a base material, and a printed layer was optionally formed on the inner surface of the base material. A PE resin film such as LLDPE was used as a sealant film, and the base material and the sealant were laminated via an adhesive layer through a dry lamination method to produce a laminated film of Example 1.

### (Laminated film of Example 2)

A sealant film such as LLDPE was laminated on the inner surface of a coextruded film of an embodiment via an extruded resin layer of a PE resin. A PE resin film such as HDPE was used as a base material, and a printed layer was optionally formed on the inner surface of the base material. The base material was laminated on the outer surface of the coextruded film via an adhesive layer through a dry lamination method to produce a laminated film of Example 2.

### (Laminated film in Comparative Example 1)

A PE resin film was used as a base material, and a printed layer was formed on the inner surface of the base material. A PE resin film such as LLDPE was used as sealant, and the base material and the sealant were laminated via an adhesive layer through a dry lamination method to produce a laminated film of Comparative Example 1.

### (Laminated film in Comparative Example 2)

A polyester resin film such as stretched polyester or stretched polyamide was used as a base material, and a multi-layer coextruded sealant film containing an EVOH layer was used as sealant. The base material and the sealant were laminated via an adhesive layer through a dry lamination method to produce a laminated film of Comparative Example 2.

The laminated film of Comparative Example 1 has favorable recyclability but poor barrier properties. The laminated film of Comparative Example 2 is not easily recyclable because polyester, polyamide, or the like is laminated. In addition, in Comparative Example 2, it is not easy to reduce the thickness of the EVOH layer. The laminated films of Examples 1 and 2 can achieve both recyclability and barrier properties by laminating a film obtained by coextruding EVOH and PE with PE sealant.

### INDUSTRIAL APPLICABILITY

According to the present invention, the coextruded film does not need to be as thick as a multilayer sealant film, and therefore, the thickness of the barrier resin layer formed from EVOH can be reduced, thereby achieving both recyclability and barrier properties. Costs can be reduced because the amount of relatively expensive EVOH used can be reduced. Since the sealant layer can be composed without EVOH, there is more degree of freedom in the design of the sealant layer. Accordingly, the present invention is industrially applicable.

### REFERENCE SIGNS LIST

10, 20 Laminated film
11, 21 Sealant layer
12, 22 Coextruded film
13, 26 Adhesive layer
14, 24 Polyethylene resin layer
15, 25 Barrier resin layer
23 Extruded resin layer
27 Base material film
30 Standing pouch (packaging bag)
32 Container main body
34 Spout member
36 Body film (body material)
38 Bottom film (bottom material)
40 Heat-sealed portion

## Claims

1. A laminated film comprising:
a coextruded film in which polyethylene resin layers are adjacently laminated through coextrusion on at least a single surface of a barrier resin layer formed from an ethylene-vinyl alcohol copolymer (EVOH); and
a sealant layer that are laminated on the coextruded film.

2. The laminated film according to claim 1,
wherein the polyethylene resin layers are adjacent to both surfaces of the barrier resin layer in the coextruded film through coextrusion.

3. The laminated film according to claim 1 or 2,
wherein the barrier resin layer has a thickness of 1 to 5 µm.

4. The laminated film according to any one of claims 1 to 3,
wherein the coextruded film is used as a base material.

5. The laminated film according to any one of claims 1 to 3,
wherein the coextruded film is laminated between the sealant layer and a base material made of a polyethylene resin.

6. The laminated film according to any one of claims 1 to 4, wherein a layer made of a polyethylene resin is laminated between the sealant layer and the base material consisting of the coextruded film.

7. The laminated film according to any one of claims 1 to 6,
wherein the coextruded film is non-stretched.

8. A package formed from the laminated film according to any one of claims 1 to 7.

9. A standing pouch formed from the laminated film according to any one of claims 1 to 7.

10. A standing pouch in which only a bottom material is formed from the laminated film according to any one of claims 1 to 7.
